# EUROPEAN PATENT APPLICATION

(11) **EP 2 685 088 A1**
(43) Date of publication of application: **15.01.2014**
(21) Application number: 12461529.5
(22) Date of filing: 11.07.2012
(51) Int. Cl.: F03B 17/06

(54) **Floating water power station**

(71) Applicant: Jeute, Piotr, 02-928 Warszawa (PL)
(72) Inventor: Jeute, Piotr, 02-928 Warszawa (PL)
(74) Representative: Pawlowski, Adam

(57) **Abstract**

A floating water power station, comprising rolls (110, 120) with a horizontal rotation axis, between which a driving belt (130) with blades (140) is mounted, at least partially submerged in water such that in the working run (138) the blades (140) resist water flow to a larger extent than in the return run (139). The rolls (110, 120) have a total design displacement, for submersion of the power station smaller than the length of the radius (R1, R2) of each roll (110, 120) equal to the total weight of the power station, wherein the distance between the rolls (110, 120) is limited to a distance (D) at which the length of the return run (139) of the driving belt is higher than the length of its working run (138) and in at least half of the length of the return run (139) the driving belt (130) floats on water surface.

## Description

The present invention relates to a floating water power station, in particular to a flow-through power station intended for installation in narrow and shallow water beds.

A water power station is used to transform the kinetic energy of flowing water into mechanical energy. Typical water power stations utilize the potential energy of water dammed above the power station, therefore they have to be installed in specific natural environments or use of artificial dams. Flow-through power stations utilize the kinetic energy of flowing water, therefore they can be installed in river courses or at the sea without the need for artificial damming, and therefore they do not interfere to a large extent with the nature. However, the known constructions of flow-through power stations are useful mainly at large river beds or at the sea.

For example, a US patent US 825,841 presents a stationary power station with a water wheel driven by water flow. The power station comprises two driving rolls connected by a belt with blades driven by water flow. The axes of both rolls are submerged in water. The blades on the driving belt are movable and have one configuration in a working run, where they are set parallel to the water flow, and another configuration in a return run, where they are set flat, thereby not resisting the flow.

A US patent US 855,164 presents a stationary power station comprising driving rolls connected by a belt with blades fixed still with respect to the belt. The axes of the rolls are located above the water level, but their bottom parts are submerged, such that the working part of the driving belt is fully submerged together with the blades. The return portion of the driving belt, located high above the water level, is supported by a support.

In turn, a US patent application no. US 2006/0162330 presents a generator anchored by poles to the bottom, and comprising two rolls connected by a driving belt with blades, wherein the axes of the blades are located on the water surface. The belt is stretched between the driving belts, such that its return portion, located above the water surface, runs along a line tangent to both rolls.

The stationary devices have the disadvantage that they require high investment costs and are adapted to be installed at the sea or in large rivers. Therefore, there have been designed floating water power stations, having sizes smaller than the stationary power stations. The floating power stations can be relocated and do not interfere much with the nature.

For example, a US patent US 787,562 presents a floating water engine, which comprises a floating body, on which there are mounted rolls driven by a driving chain with blades. The body keeps the rolls fully above the water surface, wherein only the working portion of the chain is submerged in water. The return portion of the chain runs above the top edge of the rolls. The body, in order to provide appropriate displacement, significantly increases the size of the working part of the power station. The chain, in its return run, being stretched above the water surface, may be subject to deformation (straining).

A US patent US 3,887,817 presents another construction of a floating water power station, comprising a single driving roll with a vertical axis. The roll is driven by a driving line with elements which deform under water flow, such that when they are set in the flow direction they resist the flow, and when they are set opposite to the flow direction, they fold and minimize the resistance. The return portion and the working portion of the driving line are located in a horizontal plane or in a slightly slanted plane, if the end of the line flows above the plane of rotation of the roll. This solution requires to be anchored to the bottom on a stiff pole in order to keep the vertical axis of the driving roll, and the free-floating line with deformable elements is prone to damage, for example by large fish or wood pieces flowing in water.

Moreover, a US patent application no. US 2008/0303284 presents a floating water power station comprising a floating body, on which there are mounted two small rolls driven by a driving belt with blades. The belt is submerged in water in its working run and therein the blades set a resistive position, wherein in the return run the blades run above the water and fold to minimize the resistance. The axes of the driving rolls are located on the water surface. Due to small sizes of the driving rolls, the return portion of the belt, which is located above the water surface, is not subject to significant deformations. However, the body increases the size of the power station beyond its working portion.

It would be desirable to provide a floating water power station having small sizes and a construction which provides failure-free operation, which could furthermore be mounted and demounted in an easy manner even in narrow and shallow water beds, even in streams, with a minimum interference with the nature and minimum hazard to water fauna.

The object of the invention is a floating water power station, comprising rolls with a horizontal rotation axis, between which a driving belt with blades is mounted, at least partially submerged in water such that in the working run the blades resist water flow to a larger extent than in the return run, wherein the rolls have a total design displacement, for submersion of the power station smaller than the length of the radius (R1, R2) of each roll equal to the total weight of the power station, wherein the distance between the rolls is limited to a distance (D) at which the length of the return run of the driving belt is higher than the length of its working run and in at least half of the length of the return run the driving belt floats on water surface.

Preferably, the power station comprises two pairs of coaxial rolls (111-112; 121-122) and between the pairs of rolls there extend two driving belts.

Preferably, the driving belts have alternately positioned blades shaped as to impose the inflow of water towards the axis of the belt on the following blade.

Preferably, the blades are mounted on belts by means of supports with an intersection with hydrodynamic resistance smaller than the resistance of the blade.

Preferably, the rolls have the same radius (R1, R2).

Preferably, the working roll to be placed upstream has a radius (R1) smaller than the radius (R2) of the return roll.

Preferably, to the working roll to be placed upstream there is connected an electric power generator for converting the mechanical energy of the rotating working roll to electric energy.

Preferably, the electric power generator is positioned below the axis of the working rolls and mounted thereon on a tow bar perpendicular to the axis.

Preferably, the end of the tow bar is distanced from the axis at a length higher than the length of the radius (R1) of the working rolls.

Preferably, the power station is anchored to the bottom or to the banks of the water channel by means of lines or chains.

Preferably, the driving belt has a positive displacement.

Preferably, the working belt in the return run flows directly on water.

Preferably, the driving belt in the return run flows on a floating element floating on water.

Preferably, the working rolls and the return rolls have horizontal rotation axes which are not parallel to each other, such that the working run of the belt is shifted in the horizontal plane with respect to the return run of the belt.

Preferably, the power station comprises weight rolls, which impose a load on the working run of the belt such as it runs at a distance below the return run of the belt.

The object of the invention is shown by means of exemplary embodiment on a drawing, in which:
Fig. 1 shows schematically the object of the invention in a top view,
Fig. 2 shows schematically the object of the invention in a side view,
Fig. 3A-3C show a first embodiment of the invention in a side view, top view and slanted view,
Fig. 4 presents an embodiment of a working roll,
Fig. 5 presents an embodiment of a tow bar,
Fig. 6A-6C present a single segment of a caterpillar with a blade in a cross-sectional side view, top view and slanted view,
Fig. 7 presents a second embodiment of the invention,
Fig. 8 presents a third embodiment of the invention,
Fig. 9 presents a fourth embodiment of the invention.

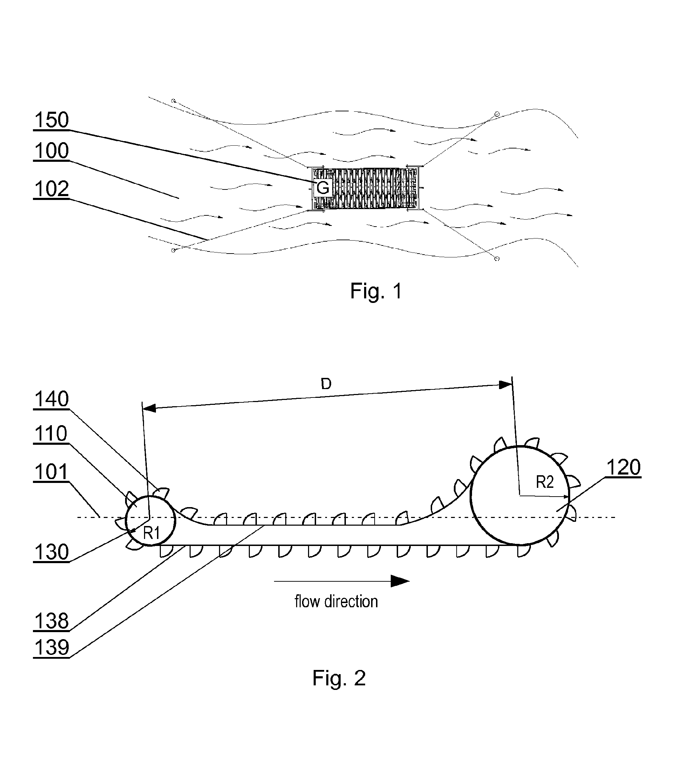

Figs. 1 and 2 present schematically the object of the invention in a top view and in a side view. The floating water power station may be installed in the runs of even small water beds 100, such as narrow rivers or streams, and anchored to the bottom or to the bank by means of lines 102. The power station comprises two rolls 110, 120 having a horizontal rotation axis, between which there runs a driving belt 130 with blades 140 which resist water when submerged, i.e. located below water surface 101. The driving rolls 110, 120 have a total design displacement, for submersion smaller than the length of the radius R1, R2 of each roll, equal to the total mass of the power station. The design displacement is understood as the sum of the own mass of the rolls and their deadweight capacity equal to the maximum allowed submersion of the water station. Therefore, at least half of the volume of both driving rolls 110, 120 is kept above the water surface 101, and therefore water does not resist much the rotation of the rolls. Preferably, the submersion of the power station does not exceed a quarter of the radius R1, R2 of each of the rolls.

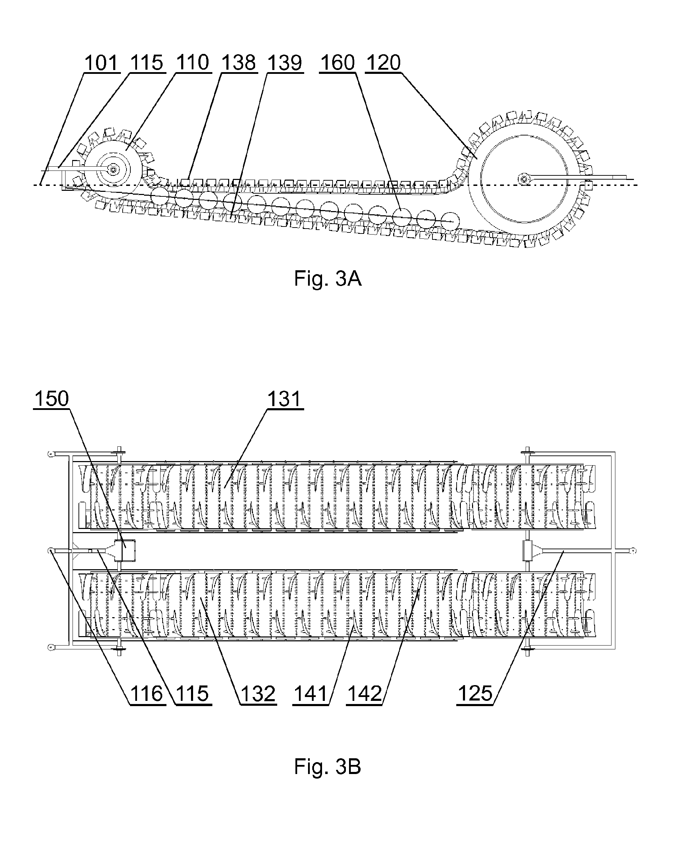

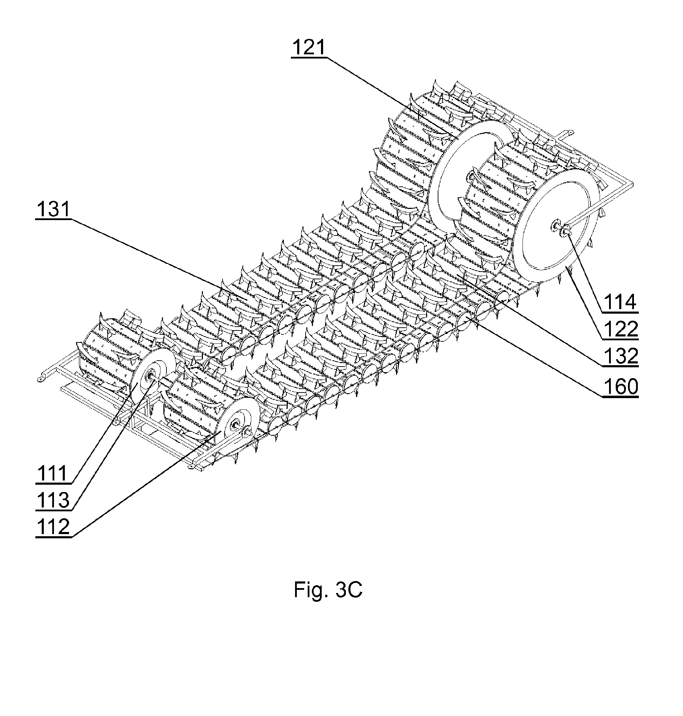

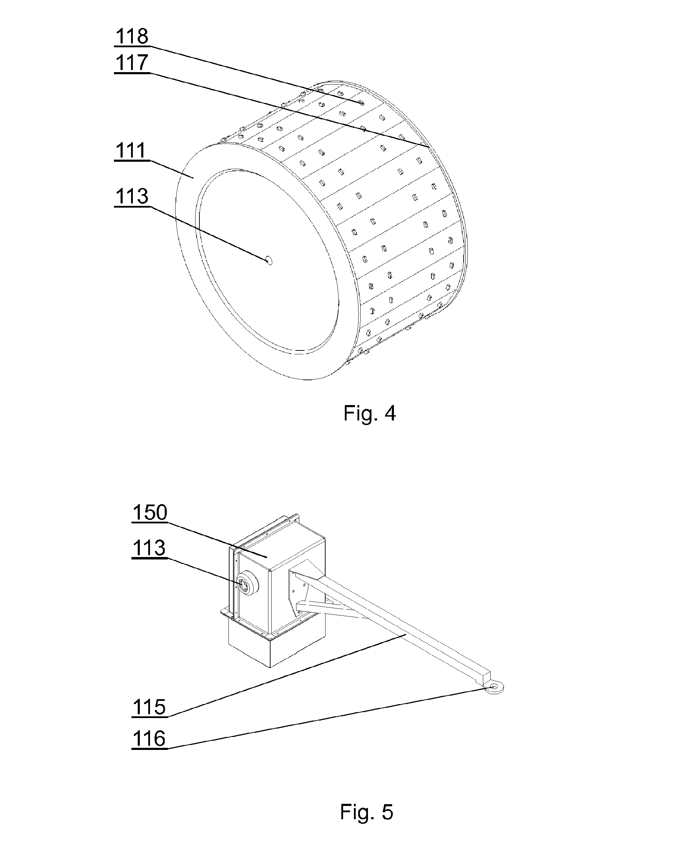

In a preferred embodiment, as shown in Figs. 3 and 4, the rolls 110, 120 have the same dimensions. If the rolls 110, 120 have different dimensions, it is preferable for the working roll 110, located upstream, to have a smaller diameter than the return roll 120, located downstream.

A generator 150 is coupled with the working roll 110, which converts the mechanical energy of the rotating roll 110 to electric energy, which can be stored in an accumulator of the power plant or transmitted to the bank, for example by means of a separate cable or via one of the anchoring lines or chains 102.

The driving belt 130 in the working run 138 is located below the water surface and its blades 140 are shaped such that they resist water and therefore the flow of water runs the driving belt. In the return run 139 the driving belt 130 exits above the water surface to a height defined by the diameter of the rolls 110, 120 and their submersion, wherein in at least half of the length of the return run 139 the driving belt floats freely on the water surface 101. Thereby, the distance D between the driving rolls 110, 120 is limited. Therefore, the length of the working run 138 is smaller than the length of the return run 139 of the driving belt 130. The limitation of the distance D can be achieved by meshing the belt 130 in appropriate positions of the driving rolls 110, 120, or by a connector joining the axes of the rolls 110, 120, or by weight rolls or by other means. Due to the fact that at least half of the length of the driving belt 130 in its return run 139 floats on water, the wear of the belt is reduced, as it is subject to different loads than in a situation in which it would hang in the whole length of the return run in the air above water. Positioning the belt above water would require additional resistance and cost of support or straining elements. In order for the belt to freely float on the water surface, the belt should have a positive displacement, i.e. it should be made of a material which is lighter than water or comprise air chambers for increasing the belt displacement.

The driving belt 130 has a form of a caterpillar and comprises segments 133 made preferably of hard polyethylene (partially foamed or empty inside) and connected together by acid-resistant steel pins. Each caterpillar segment 133 is integrated with a working blade 140 and its supports and has a positive displacement, therefore it can freely flow on water surface. The displacement of the caterpillar segment 133 is selected such that in the return run 139, wherein the blades 140 are directed upwards and located above the water surface, the majority of the volume of the caterpillar segments, preferably above 90%, is located below water surface. The caterpillar segment 133, at the side opposite to the side on which the blade 140 is mounted, is flat and has rounded edges, such that in the return run on water surface it minimizes the resistance. The blade, together with the support elements, shall have a specific gravity close to the specific gravity of water, preferably above 0,9 kg/m3. Such distribution of displacement facilitates reduction of friction resistance between the working run and the return run of the caterpillar.

Figs. 3A-3C present a first embodiment of the power station according to the invention, in a side view, top view and slanted view, respectively. In this embodiment the power station comprises two pairs 110, 120 of coaxial cylinders 111-112, 121-122 having horizontal rotation axes 113, 114, between which driving belts 131, 132 extend.

The working belt 130 has a shape of a caterpillar comprising segments 133. The working rolls 111, 112 have teeth 118 on their outer surface, which enter corresponding openings in the caterpillar segments to transmit the moment of a caterpillar moving along with the water flow to the rotational movement of a working axis 113, coupled by means of a multiplying gear to a generator 150. In addition, the rolls 111, 112, 121, 122 have side guides, which keep the driving belts 131, 132 and limit their slip out of rolls, which is more clearly visible in Fig. 4, which shows the working roll 111.

On the shaft 113 of the working rolls 111-112 there is mounted, by bearings, a housing 151 of the generator 150 with the multiplying transmission and the mounting of the first tow bar 115, shown in details in Fig. 5. The arm of the first tow bar 115 has a length longer than the radius R1 of the working rolls 111, 112 and is terminated by an opening 116 for mounting the anchoring line or chain 102 which anchors the working part of the power station in the water flow. Due to the fact that the generator 150 with the multiplying transmission is located below the axis 113 and at a right angle to the tow bar 115, it is possible to counterbalance the torque operating via the transmission without the need for additional support constructions.

As the generator 150 is mounted together with the transmission below the axis 113 and at the right angle to the tow bar 115, its weight functions as a reaction arm which effectively compensates the resistance force resulting from the transmission of the torque of the axis 113 to the generator 150 without additional support constructions.

Similarly, on the axis 123 of the return rolls 121, 122 there is mounted, via two bearings connected by a steel triangle, a second tow bar 125, which allows anchoring the return portion of the power station in the water flow. The arm of the second tow bar 125 has a length longer than the radius R2 of the return rolls 121, 122.

The arms of the tow bars 115, 125 which extend beyond the rolls 110, 120 allow mounting the power station by means of lines which anchor a given tow bar 115, 125 to the opposite banks of the river.

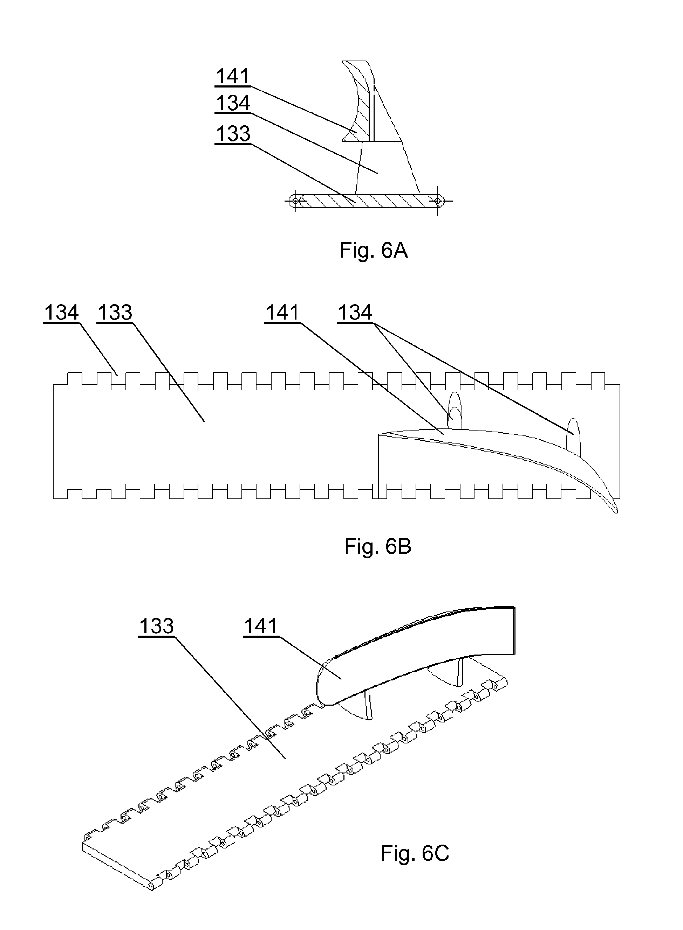

On the belts 131, 132 there are mounted working blades 140 of two types 141, 142, which have mirrored shapes, and are mounted alternately on consecutive belt segments. The shape of the blade directs the oncoming water from each successive blade towards the axis of the belt and the following blade. Due to increasing submersion of each following blade, this effectively exposes the following blades to the operation of the water flow. An embodiment of a single segment with a right blade is shown in Figs. 6A-6C in a cross-sectional side view, in a top view and in a slanted view. The blade 141 has a shape of an asymmetric arched fin, the tip of which is at a distance from the axis of symmetry of the belt 131 in the direction which causes inflow of water to the internal portion of the belt. The shape of the blade 141 is designed such as the flowing water generated a maximum force acting along the vector of movement of the working part of the caterpillar, at the same time minimizing the swelling of the water flow.

The blades 141, 142 are mounted on segments 133 by means of supports 135 having an intersection with hydrodynamic resistance smaller than the resistance of the blade, such as to minimize the resistance caused by water flowing over the return portion of the caterpillar belt, for example when water undulates. The total useful torque of the turbine is generated due to the difference between the hydrodynamic resistance of the working part 138 and of the return part 139 of the belt, which allows using part of the kinetic energy of the water flow to generate torque on the shaft 113, which allows to drive the generator 150 via the multiplying transmission.

Between the belts there are mounted weight rolls 160, which are used to keep the working part of the caterpillar submerged under the water surface 101. In the presented embodiment, the lower edge of the working rolls 111, 112 having a radius R1 is located above the lower edge of the return rolls 121, 122 having a radius R2 larger than R1. Therefore, the driving belts 131, 132 in the working part 138 are inclined to a horizontal line, which increases the efficiency of operation, because the blades 140 are subject to a larger amount of incoming water as compared to a solution wherein the working part 138 of the belt runs horizontally. The weight rolls 160 are therefore distributed such as to facilitate the increase of submersion of the belt towards the return rolls 121, 122. Preferably, the weight rolls 160 are distributed along a length substantially equal to the whole length of the working part of the belt, or not smaller than the length of the return run of the belt flowing on water. Preferably, the submersion of working rolls 111, 112 and return rolls 121, 122 is not higher than 40% and is preferably 25% for the working roll and about 35% for the return roll, wherein the ratio of the radii R1:R2 of the rolls is equal to about 1:2. To achieve this, the displacement of the working rolls 111, 112 must adequately compensate the weight of the generator 150 with the multiplying transmission and its housing.

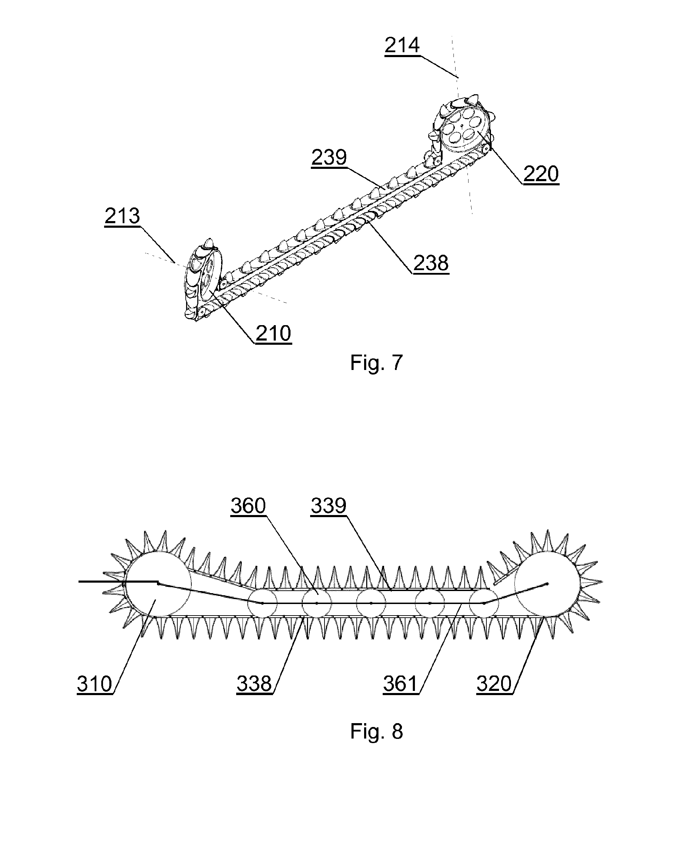

Fig. 7 presents a second embodiment of the invention, wherein the working rolls 210 and the return rolls 220 have horizontal rotation axes 213, 214, but the axes are not parallel. Therefore, the working run 238 of the belt is shifted in the horizontal plane with respect to the return run 239 and moves aside. This allows to minimize the distortion of the water flow between the runs. Moreover, this allows to direct the working run 238 of the belt just under the water surface in a manner that is not distorted by the return run 239.

Fig. 8 presents a third embodiment of the invention, wherein the weight rolls 360 impose a load of the working run 338 such that it runs at a distance below the return run 339 of the belt. The rolls 360 are fixed to steel lines 361 which connect the axes of rotation of the working roll 310 and the return roll 320 at both sides of the belt 330.

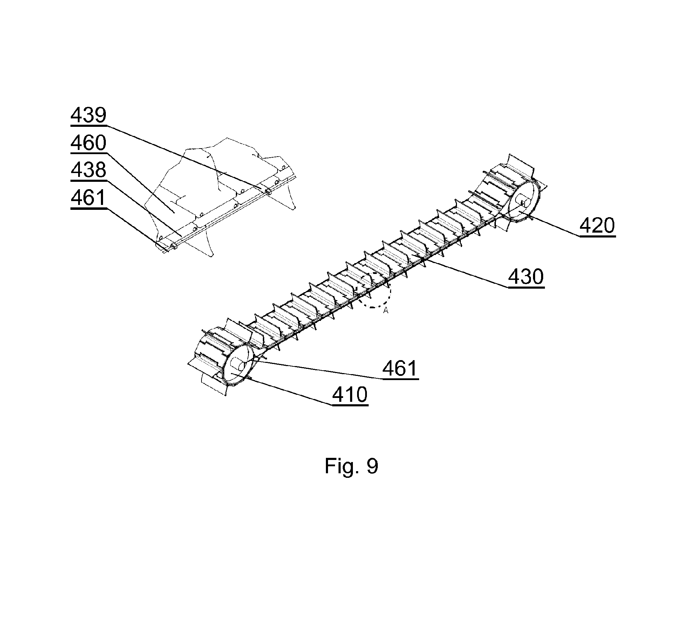

Fig. 9 presents a fourth embodiment of the invention with enlarged portion A, wherein the working run 438 is coupled with the return run 439 of the belt by rolls 460, which have a small size and their main role is not to impose load, but to bring the runs 438 and 439 of the belt as close as possible to each other, for the return run to "slide" on the working run. The rolls 460 are fixed to steel lines 461 connecting the axes of rotation of the working roll 410 and the return roll 420 at both sides of the belt 430.

## Claims

1. A floating water power station, comprising:
- rolls (110, 120) with a horizontal rotation axis,
- between which a driving belt (130) with blades (140) is mounted, at least partially submerged in water such that in the working run (138) the blades (140) resist water flow to a larger extent than in the return run (139),
**characterized in that**
- the rolls (110, 120) have a total design displacement, for submersion of the power station smaller than the length of the radius (R1, R2) of each roll (110, 120) equal to the total weight of the power station,
- wherein the distance between the rolls (110, 120) is limited to a distance (D) at which the length of the return run (139) of the driving belt is higher than the length of its working run (138) and in at least half of the length of the return run (139) the driving belt (130) floats on water surface.

2. The floating water power station according to claim 1, **characterized in that** it comprises two pairs (110, 120) of coaxial (113, 123) rolls (111-112; 121-122) and between the pairs (110, 120) of rolls there extend two driving belts (131, 132).

3. The floating water power station according to claim 2, **characterized in that** the driving belts (131, 132) have alternately positioned blades (141, 142) shaped as to impose the inflow of water towards the axis of the belt on the following blade (141, 142).

4. The floating water power station according to claim 2, **characterized in that** the blades (141, 142) are mounted on belts (131, 132) by means of supports (135) with an intersection with hydrodynamic resistance smaller than the resistance of the blade (141, 142).

5. The floating water power station according to claim 1, **characterized in that** the rolls (110, 120) have the same radius (R1, R2).

6. The floating water power station according to claim 1, **characterized in that** the working roll (110) to be placed upstream has a radius (R1) smaller than the radius (R2) of the return roll (120).

7. The floating water power station according to claim 1, **characterized in that** to the working roll (110) to be placed upstream there is connected an electric power generator (150) for converting the mechanical energy of the rotating working roll (110) to electric energy.

8. The floating water power station according to claim 7, **characterized in that** the electric power generator (150) is positioned below the axis (113) of the working rolls (111, 112) and mounted thereon on a tow bar (115) perpendicular to the axis (113).

9. The floating water power station according to claim 8, **characterized in that** the end (116) of the tow bar is distanced from the axis (113) at a length higher than the length of the radius (R1) of the working rolls (111, 112).

10. The floating water power station according to claim 1, **characterized in that** it is anchored to the bottom or to the banks of the water channel by means of lines or chains (102).

11. The floating water power station according to claim 1, **characterized in that** the driving belt (130) has a positive displacement.

12. The floating water power station according to claim 1, **characterized in that** the working belt (130) in the return run (139) flows directly on water.

13. The floating water power station according to claim 1, **characterized in that** the driving belt (130) in the return run (139) flows on a floating element floating on water.

14. The floating water power station according to claim 1, **characterized in that** the working rolls (210) and the return rolls (220) have horizontal rotation axes (213, 214) which are not parallel to each other, such that the working run (238) of the belt is shifted in the horizontal plane with respect to the return run (239) of the belt.

15. The floating water power station according to claim 1, **characterized in that** it comprises weight rolls (360), which impose a load on the working run (338) of the belt such as it runs at a distance below the return run (339) of the belt.
